Europäisches Patentamt

European Patent Office

Office européen des brevets

(19)

(11) Publication number: **0 145 266**
**B1**

# (12) EUROPEAN PATENT SPECIFICATION

(45) Date of publication of patent specification: **11.05.88**

(21) Application number: **84307687.8**

(22) Date of filing: **07.11.84**

(51) Int. Cl.⁴: **B 05 B 13/06,** B 05 B 3/02,
F 16 L 55/16

(54) **Apparatus for spray lining pipes.**

(30) Priority: **07.11.83 GB 8329713**

(43) Date of publication of application:
**19.06.85 Bulletin 85/25**

(45) Publication of the grant of the patent:
**11.05.88 Bulletin 88/19**

(84) Designated Contracting States:
**BE DE FR GB IT NL SE**

(56) References cited:
**FR-A-1 335 550**
**FR-A-2 371 627**
**GB-A- 873 915**
**GB-A-2 065 263**
**US-A-4 216 738**

(73) Proprietor: **COSTAIN STREETER LINING
LIMITED**
**111 Westminster Bridge Road**
**London SE1 7EU (GB)**

(72) Inventor: **Wilson, Edward Adam**
**c/o Costain Streeter Lining Limited**
**111 Westminster Bridge Rd London SE1 7UE**
**(GB)**

(74) Representative: **Bankes, Stephen C. D. et al**
**Baron & Warren 18 South End Kensington**
**London W8 5BU (GB)**

Courier Press, Leamington Spa, England.

## Description

The present invention relates to the application of internal spray linings or coatings to pipes, for example to restore or renovate glazed or unglazed clay or concrete sewer pipes which have deteriorated with prolonged use. More particularly the invention is concerned with spray lining or coating pipes which are too small for human access, for example pipes having an internal diameter of the order of 225 to 600 mm, by means of remotely controlled spray apparatus according to the preamble of claim 1 which travels through the pipes.

It has been proposed to line such pipes with a two part, epoxy resin-based composition. The two parts of the composition are fed, from a location outside the pipe to be lined, via separate hoses, to a sprayer mounted on a sledge or carriage where the two parts are mixed to initiate the curing process. The mix is then sprayed as the sledge is drawn through the pipe.

GB—A—2 082 285 and GB—A—2 120 351 disclose spraying apparatus mounted on a sledge or carriage which is connected to a supply of coating material and pulled through the pipe to be lined. According to GB—A—2 120 351 an uncured epoxy resin is heated before being pumped to the spraying apparatus, to render it sufficiently fluid to be sprayed.

US—A—4216738, forming the preamble of claim 1 discloses spraying apparatus for applying a thin layer of anti-rust paint to the inside of a pipe, including a cylindrical spinner mounted on, and surrounding, a drive shaft. The spinner has circumferentially and longitudinally aligned holes throughout the length and circumference of its cylindrical surface. Paint is supplied to the inside of the spinner via a perforated pipe.

It is one object of the present invention to provide an improved spray apparatus which is particularly but not exclusively intended to apply a two part, polyurethane resin-based spray lining or coating of the type disclosed in our copending application No: 843076985 filed on even date. This resin becomes thixotropic virtually immediately the two parts are intermixed, so that the spray apparatus must not only be capable of spraying a relatively viscous resin, but must also be capable of applying the resin relatively evenly over the internal surface of the pipe.

According to the present invention, there is provided a rotary spraying device for applying a coating material to the inside of pipe or the like, of a type wherein the material is fed to a rotating spinner by which it is thrown radially outwardly onto the surface to be coated, wherein the spinner comprises a tubular member arranged to rotate around its central axis and with apertures spaced axially along its length whereby material fed to the radially inner side of the tubular member passes through said apertures and leaves the spinner at a plurality of axially spaced positions, characterised in that the tubular member is in the form of a frusto-conical shell with the apertures therein arranged in rows extending throughout a major proportion of the length of the shell and each said row also extending helically around at least a part of the circumference of the shell, and in that the shell is attached at its narrower end to a rotary hub, the hub having a shaft thereon coaxial with the shell and attached to a rotary drive means and an annular duct for feeding the coating material surrounding the shaft and communicating with the inside of the shell through a plurality of radial apertures in the hub whereby rotation of the hub with the shell causes the coating material to pass through said radial apertures onto the inner surface of the shell and thence towards the wider end of the shell.

In order that the invention may be more readily understood, reference will now be made to the accompanying drawings, in which:

Figure 1(a and b) is a diagrammatic view of a spray lining system embodying the invention; and

Figure 2 is an axial section showing one quadrant of a rotary spray head or spinner embodying the invention.

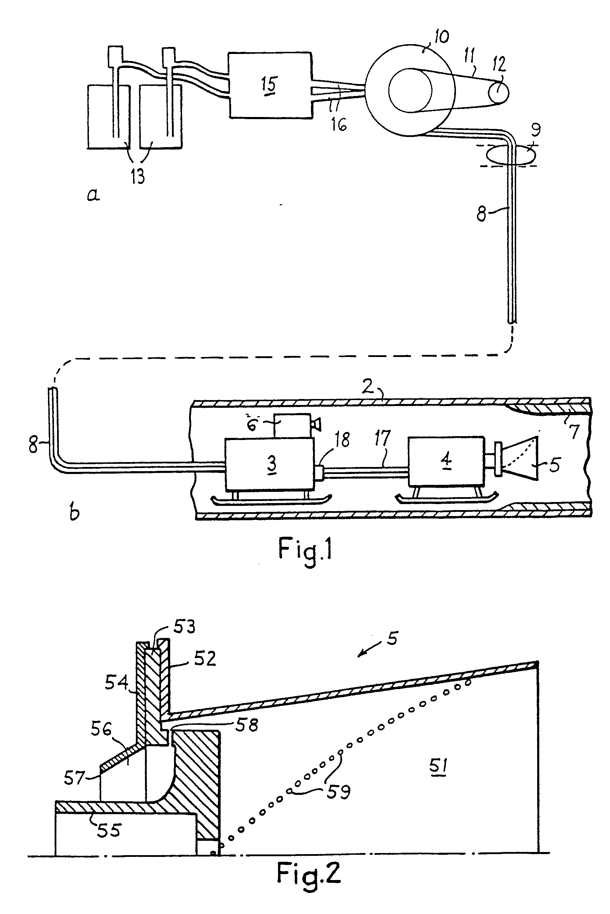

Referring to Figure 1, the spray lining system comprises sledges 3 and 4 which, in operation, are drawn on their runners through a non-man-entry sewer pipe 2 to be lined. The sledge 4 carries a final mixer arrangement, connected to a sprayer arrangement terminating, at the rear of the sledge, in a rotary spray head or spinner 5. The sledge 3 carries a closed-circuit television camera 6 to enable remote visual observation of the sprayed lining 7.

The sledge 4 is connected to sledge 3 by an umbilical 17, which includes a pipe for two components of the coating material to be mixed finally in sledge 4 before being sprayed. The umbilical may also include a strain cable so that tension is not applied to the pipe itself. The umbilical also carries a compressed air supply to drive the spinner 5 by means of an air turbine. It is connected to the sledge 3 by an universal joint 18 so that twisting movements of sledge 3 as it is pulled along the pipe are not passed on to sledge 4, so that sledge 4 runs smoothly.

The rotary spray head or spinner 5, which will be described later with reference to Figure 2, is driven by, e.g. mounted on, the output shaft of an air motor or carried by the sledge 4. The motor may, for example, be a 1.5 kW motor which rotates the spinner 5 at a free speed of the order of 1400 rpm, about an axis which, in operation, is intended to be generally coincident with the sewer pipe axis.

The mixer arrangement for the coating material includes a preliminary static mixer or mixer manifold in sledge 3 to which the two parts of the polyurethane resin composition are individually supplied via respective remotely operable on/off valves. The valves may be pneumatically operated, electromagnetically controlled valves, mounted on the sledge or manifold. The manifold basically comprises a cylindrical chamber into which the two resin parts are injected via generally tangential ports. The parts circulate in the chamber, and the resultant partially mixed resin is expelled from the chamber via a generally axial port. The partially mixed resin is fed from the mixer manifold along a pipe in umbilical 17 to a main mixer, for example a Ross-type static mixer, in sledge 4 where the mixture is again circulated in a cylindrical chamber. The chamber contains profiled elements or vanes which are displaced by the circulation within the chamber, and serve to enhance mixing. The fully mixed resin is expelled from the main mixer and supplied to the spinner 5.

The sledges 3 and 4 are pulled along within the sewer pipe 2 by a single umbilical or composite line 8, typically about 100 metres long. The composite line 8 includes a pair of flexible, wire-braided hoses for separately supplying the two parts of the polyurethane resin composition to the mixer manifold via the respective remotely operable on/off valves. The line 8 also includes an air hose for supplying compressed air to the spinner air motor and on/off valves, and electrical cables respectively associated with the television camera 6 and the on/off valves. As in umbilical 17, a strain rope or cable, for example a Kevlar cable, may also be included in the composite line 8, to relieve the hoses of the tensional forces involved in pulling the sledge and thus reduce pulsing in the supply of resin components. The line 8 may also include a further hose for supplying additional catalyst to the mixer manifold, via a third remotely operable on/off valve, if it is desired to accelerate the curing of the resin, for example when spraying is to take place under relatively wet conditions. The bundle of hoses and cables is contained in a plastics sheath, for example sheathed in polyurethane to form a single composite line. The line 8 may, for example, have an external diameter of 79 to 90 mm, and a minimum bend radius of 650 to 700 mm.

The composite line 8, remote from the sledge 1, passes out through a manhole 9 communicating with the sewer pipe 2, and is wound around the reel 10 of a trailer-mounted, motor driven winch. The reel, which may for example be 2.2 m. in diameter, and is provided with appropriate paying in/out gear or rollers, is driven via chain 11 by a motor 12 such as a $1\frac{1}{2}$ kW, 240 vAC, $8\frac{1}{2}$ rpm synchronous motor, which enables the line 8 to be wound onto the reel at a line speed variable from 0.25 to 2.0 m/minute. Due to the diameter of the reel, the line 8 is wound onto the reel in a single layer. The winch motor 12 is associated with a speed control system or circuit which enables the reel to be rotated, and therefore enables the sledge to be drawn, at a substantially constant adjusted speed ($\pm3\%$), irrespective of changes in tension in the line 8. A clutch may be provided between the winch motor and reel to enable the motor to be disengaged when it is required to rapidly pay out the line 8. The winch may also be capable of operating at a relatively high speed, for example to enable withdrawal of the sledge at approximately 10 m/minute. The winch may provide a maximum pull of approximately 500 kg, and may include an overload cutout to prevent overstraining the line 8. Speed and distance measuring devices may also be associated with the winch.

The necessary external electrical connections may be made to the cables on the reel 10 via associated slip rings carried by the reel. The necessary connections to the resin, catalyst and air hoses may be made via suitable rotary fluid unions carried by the reel, for example associated with fluid passages in a shaft or axle which rotates with the reel. The reel and paying in/out guide mechanism are preferably capable of pulling the line 8 in either a horizontal or a vertical direction.

The two parts of the polyurethane resin composition are supplied from separate resin drums or reservoirs 13, by associated air motor-drive transfer pumps 14, to the gravity hoppers of an air motor-driven metering pump 15. These parts (a water emulsion part and a diisocyanate water-sensitive part as disclosed in our aforementioned copending application) may have viscosities of the order of 1000 and 5000 centipoise respectively. The metering pump 15 may operate at a maximum pumping speed of approximately 15 cycles/minute, the output of the two parts of the composition from the pump being approximately 600 cc/cycle. The metered amounts of the two parts are supplied separately by the pump 15, via hoses 16 and the rotary unions, to the respective hoses of the composite line 8, for example at a maximum or working pressure of approximately 1000 to 1500 psi, and a flow rate of approximately 5 litres/minute.

Due to the hydro-elastic effects of the resin hoses of the line 8, i.e. differential expansion along their length under pressure, the flow rates and/or pressures at their downstream ends tend to vary. By feeding the two parts into the mixer manifold before the main mixer, variations in the mixture ratio which might otherwise occur due to the latter fluctuations are effectively eliminated.

As previously mentioned, the polyurethane resin composition which is employed becomes thixotropic relatively quickly after the two parts are mixed, and is relatively viscous. This gives rise to problems, since it is difficult to apply the spray coating evenly within a pipe, the applied coating tending to form ridges because its surface tension is insufficient to cause the coating to flow out evenly over the pipe surface. This problem has been effectively solved by employing a rotary spray head or spinner 5 of the type shown in Figure 2.

Figure 2 shows one quadrant only of the spinner 5, the other quadrants being identical. The spinner includes a frusto conical tubular member 51, open at its larger (e.g. 100 mm) diameter end, and provided with a flange 52 at its smaller (e.g. 72 mm) diameter end, by which it is secured to an intermediate disc member 53 and a back plate 54, for example by bolts. The disc member 53 has a hollow axial hub 55 by which the spinner is mounted on the output shaft of its drive motor, for rotation thereby, for example at approximately 1400 rpm. The hub 55 is surrounded by an annular chamber 56, into which the mixed resin composition from the main mixer is introduced, due to the pressure of the metering pump 15, via the annular opening 57. The disc member 53 is provided with a plurality of circumferentially distributed, generally radially extending apertures 58 (e.g. 4 mm diameter, 15° angular spacing) through which the mixed resin is forced centrifugally when the spinner is rotated. The tubular member 51, which may be approximately 100 mm long, is provided with rows of closely spaced apertures 59, for example one row of $1\frac{1}{2}$ mm diameter apertures in each quadrant. The rows extend throughout a major proportion of the length of the tubular member 51, and are inclined or skewed relative to the direction of the axis of rotation of the spinner to form a helical pattern.

With this arrangement, when the spinner is rotated, mixed resin is thrown through the apertures 58 against the inside surface of the tubular member 51, and spreads substantially evenly over the inside surface, both circumferentially, and longitudinally due to the taper of the member 51. The mixed resin is then forced centrifugally through the rows of apertures 59 and sprayed or thrown (e.g. at a dissipation rate of approximately 10 litres/minute) against the inside of the sewer pipe 2 to build up the coating or lining 7 shown in Figure 1. The inclination or skew of the rows of apertures 59 coupled with the longitudinal extent of the rows, and degree of taper of the member 5a, enable a substantially even spray coating to be built up in the pipe. The spray pattern from the spinner has a good band width, i.e. spread or width in a direction parallel to the axis of the sewer pipe 2, and therefore a good overlap in the latter direction as the sledges are advanced. The spinner configuration further tends to even out the effects on the spray coating 7 of any variations in speed of the sledges.

The thickness of the spray coating 7, which may form a structural, self-supporting lining once it has cured, may be from 5 to 15 mm, the thickness being adjusted as required, for example by adjusting the speed of advance of the sledges 3, 4 and/or the dissipation rate of the spinner 5.

Since the sledges 3, 4 are usually drawn in one direction through the sewer pipe, and are not reversible, the spinner 5 and its associated air motor are preferably mounted for longitudinal reciprocation on the sledge 4, for example reciprocable over a distance of 5 to 10 inches. This may be achieved by mounting the spinner on a carriage coupled to one or more longitudinal feed. screws rotatable by a remotely controlled air motor, and cantilevered from the sledge. This reciprocable mounting enables the spinner to be displaced backwards and forwards relative to the sledge, for example when the sledge is stationary, to permit local repairs to a sewer pipe to be effected, or to re-coat or thicken an adjacent previously sprayed portion of the coating.

The closed-circuit television system is employed to monitor visually the interior of the sewer pipe, the spray process, and the spray coating or lining formed. The sledge-mounted television camera, together with the use of the sledge mounted, remotely operable on/off resin valves, ensures adequate control of the spraying procedure in non-man access pipes.

It will be understood that various modifications may be made without departing from the scope of the present claims.

Electrical control circuitry, including a feed back loop, may be associated with the metering pump 15 and winch reel 10, to adjust the pumping rate if the reel speed varies, or vice versa, to automatically maintain a substantially constant thickness of coating.

The dimensions and configurations of the various components, for example the spinner, may be varied, as may be the pressures, flow rates, speed etc. The number and size of the apertures 58 and/or 59 may be changed, as may be the number and inclination of the rows of apertures 59.

## Claims

1. A rotary spraying device for applying a coating material (7) to the inside of a pipe (2) or the like, of a type wherein the material is fed to a rotating spinner (5) by which it is thrown radially outwardly onto the surface to be coated, wherein the spinner comprises a tubular member (51) arranged to rotate around its central axis and with apertures (59) spaced axially along its length, whereby material fed to the radially inner side of the tubular member passes through said apertures and leaves the spinner at a plurality of axially spaced positions, characterised in that the tubular member (51) is in the form of a frusto-conical shell with the apertures (59) therein arranged in rows extending throughout a major proportion of the length of the shell and each said row also extending helically around at least a part of the circumference of the shell, and in that the shell is attached at its narrower end to a rotary hub (55), the hub having a shaft thereon coaxial with the shell and attached to rotary drive means and an annular duct (56) for feeding the coating material surrounding the shaft and communicating with the inside of the shell (51) through a plurality of radial apertures (58) in the hub (55) whereby rotation of the hub with the shell causes the coating material to pass through said radial apertures onto the inner surface of the shell and thence towards the wider end of the shell.

2. A rotary spraying device according to Claim 1 characterised in that the tubular member (51) is open at its end and remote from the hub (55).

3. A rotary spraying device according to claim 1 or claim 2 wherein the spinner (5) and a motor driving it are mounted on a sledge (4) adapted to be pulled through a pipe (2).

4. A rotary spraying device according to claim 3 wherein the sledge (4) includes a final mixer for two components of the coating material.

5. A rotary spraying device according to claim 3 or claim 4 wherein the spinner (5) can be moved reciprocally along its axis of rotation relative to the sledge (4).

6. A rotary spraying device according to any one of claims 3 to 5 wherein the sledge (4) carrying the spinner (5) is connected to a second sledge (3) by a linkage which includes a universal joint (18) and one or more feed pipes (17) for the coating material or components thereof.

7. A rotary spraying device according to claim 6 wherein the second sledge (3) is connected, at its end remote from the first sledge (4), to an umbilical (8) which incorporates one or more feed pipes for the coating material and a strain cable.

8. A rotary spraying device according to claim 6 or claim 7 wherein the second sledge (3) carries a preliminary mixer for two or more components of the coating material.

9. A rotary spraying device according to any one of claims 6 to 8 wherein the second sledge (3) carries a television camera (6) for monitoring of the coating operation.

**Patentansprüche**

1. Rotationsspritzgerät zum Auftragen eines Beschichtungsmaterials auf das Innere eines Rohres (2) oder dergleichen, bei dem das Material einer sich drehenden Schleuder (5) zugeführt wird, welche das Material radial nach außen auf die zu beschichtende Fläche auswirft, wobei die Schleuder aus einem röhrenförmigen Teil (51) besteht, das um seine Hauptachse drehbar gelagert ist und mit Öffnungen (59) versehen ist, welche auf einer Länge axial voneinander beabstandet angeordnet sind, so daß zu der radial inneren Seite des röhrenförmigen Teils (51) geführtes Material die Öffnungen passiert und aus der Schleuder an einer Vielzahl axial voneinander beabstandeter Stellen austritt, dadurch gekennzeichnet, daß das röhrenförmige Teil (51) als kegelstumpfförmiges Gehäuse ausgebildet ist, bei dem die Öffnungen (59) in Reihen angeordnet sind, die kontinuierlich auf dem größten Teil der Länge des Gehäuses verlaufen, wobei sich jede Reihe schraubenartig um wenigstens einen Teil des Gehäuseumfangs windet, und daß das Gehäuse an seinem verengten Teil an einer drehbaren Nabe (55) angebracht ist, wobei die Nabe koaxial mit dem Gehäuse ausgerichtet ist und mit einem Drehantrieb sowie mit einer ringförmigen Durchführung zum Zuführen des Beschichtungsmaterials verbunden ist, welchen den Schaft umgibt und mit der Innenseite des Gehäuses (51) über eine Vielzahl von radialen Öffnungen (58) in der Nabe (55) in Verbindung steht, wodurch aufgrund der Rotation der Nabe mit dem Gehäuse das Beschichtungsmaterial aus den genannten radialen Öffnungen austritt auf die Innenseite des Gehäuses und von dort hin zu dem weiteren Ende des Gehäuses gelangt.

2. Rotationsspritzgerät nach Anspruch 1, dadurch gekennzeichnet, daß das röhrenförmige Teil (51) an seiner von der Nabe abgewandten Seite offen ist.

3. Rotationsspritzgerät nach Anspruch 1 oder 2, dadurch gekennzeichnet, daß die Schleuder (5) und ein sie antreibender Motor auf einem Schlitten (4) montiert ist, der durch eine Röhre (2) ziehbar ist.

4. Rotationsspritzgerät nach Anspruch 4, dadurch gekennzeichnet, daß der Schlitten Endmixer für zwei Komponenten des Beschichtungsmaterials aufweist.

5. Rotationsspritzgerät nach Anspruch 3 oder 4, dadurch gekennzeichnet, daß die Schleuder (5) entlang ihrer Drehachse in bezug auf den Schlitten (4) hin- und herbewegbar ist.

6. Rotationsspritzgerät nach einem der Ansprüche 3 bis 5, dadurch gekennzeichnet, daß der die Schleuder (5) tragende Schlitten (4) an einen zweiten Schlitten (3) über eine Verbindung angeschlossen ist, welche ein Universalgelenk (18) und eine oder mehrere Zuführröhren (17) für das Beschichtungsmaterial oder dessen Komponenten aufweist.

7. Rotationsspritzgerät nach Anspruch 6, dadurch gekennzeichnet, daß der zweite Schlitten (3) an seinem vom ersten Schlitten (4) abgewandten Ende an eine Versorgungsleitung mit einer oder mehreren Zuführungsröhren für das Beschichtungsmaterial und mit einem Spannungsentlastungskabel angeschlossen ist.

8. Rotationsspritzgerät nach Anspruch 6 oder 7, dadurch gekennzeichnet, daß der zweite Schlitten (3) einen Vormxer für zwei oder mehrere Komponenten des Beschichtungsmaterials trägt.

9. Rotationsspritzgerät nach einem der Ansprüche 6 bis 8, dadurch gekennzeichnet, daß der zweite Schlitten (3) eine Fernsehkamera (6) zur Überwachung des Beschichtungsvorganges trägt.

**Revendications**

1. Dispositif de pulvérisation rotatif pour l'application d'un matériau de revêtement (7) sur la surface intérieure d'un tuyau (2) ou équivalent, du type où le matériau est fourni à un organe centrifuge rotatif (5) au moyen duquel il est projeté radialement à l'extérieur sur la surface qui doit être recouverte, l'organe centrifuge rotatif comportant un élément tubulaire (51) agencé pour tourner autour de son axe central et muni d'ouvertures (59) espacées axialement sur sa longueur, le matériau fourni au côté intérieur radial de l'élément tubulaire passant à travers lesdites ouvertures et quittant l'organe centrifuge en une pluralité de lieux axialement espacés, caractérisé en ce que l'élément tubulaire (51) a la forme d'une enveloppe tronconique munie d'ouvertures (59) agencées sur des rangées s'étendant d'un bout à l'autre sur une grande partie de la longueur de l'enveloppe et chacune desdites rangées s'étendant en hélice autour d'au moins une partie de la circonférence de l'enveloppe, et en ce que l'enveloppe est attachée à son extrémité la plus étroite à un moyeu rotatif (55), le moyeu ayant un arbre coaxial à l'enveloppe et attaché à des moyens d'entraînement rotatif et un conduit annulaire (56) pour alimenter le matériau de revêtement entourant l'arbre et communiquant avec l'intérieur de l'enveloppe (51) par l'intermédiaire d'une pluralité d'ouvertures radiales (58) percées dans le moyeu (55), la rotation du moyeu avec l'enveloppe provoquant le passage du matériau de revêtement par lesdites ouvertures vers la surface intérieure de l'enveloppe et de là vers l'extrémité la plus large de l'enveloppe.

2. Dispositif de pulvérisation rotatif selon la revendication 1, caractérisé en ce que l'élément tubulaire (51) est ouvert à son extrémité et est éloigné du moyeu (55).

3. Dispositif de pulvérisation rotatif selon la revendication 1 ou la revendication 2, caractérisé en ce que l'organe centrifuge (5) et un mmoteur l'entraînant sont montés sur un traineau (4) adapté à être poussé à l'intérieur du tuyau (2).

4. Dispositif de pulvérisation rotatif selon la revendication 3, caractérisé en ce que le traîneau (4) comporte un mélangeur final pour deux composants du matériau de revêtement.

5. Dispositif de pulvérisation rotatif selon la revendication 3 ou 4, caractérisé en ce que l'organe centrifuge (5) peut être déplace d'un sens et de l'autre le long de son axe de rotation par rapport au traîneau (4).

6. Dispositif de pulvérisation rotatif selon l'une des revendications 3 à 5, caractérisé en ce que le traîneau (4) supportant l'organe centrifuge (5) est connecté à un second traîneau (3) par une liaison qui comporte un joint universel (18) et une ou plusieurs canalisations d'alimentation (17) pour le matériau de revêtement ou ses composants.

7. Dispositif de pulvérisation rotatif selon la revendication 6, caractérisé en ce que le second traîneau (3) est connecté à son extrémité éloignée du premier traîneau (4) à un cordon ombilical (8) qui comprend une ou plusieurs tubulures d'alimentation pour le matériau de revêtement et un câble de renfort.

8. Dispositif de pulvérisation rotatif selon la revendication 6 ou 7, caractérisé en ce que le second traîneau (3) porte un mélangeur préalable pour deux ou plusieurs composants du matériau de revêtement.

9. Dispositif de pulvérisation rotatif selon l'une des revendications 6 à 8, caractérisé en ce que le second traîneau (3) supporte une caméra de télévision (6) pour contrôler l'opération de revêtement.

Fig.1

Fig.2